# EUROPEAN PATENT SPECIFICATION

(11) **EP 3 075 665 B1**
(45) Date of publication and mention of the grant of the patent: **09.05.2018**
(21) Application number: 16161476.3
(22) Date of filing: 21.03.2016
(51) Int. Cl.: B64F 1/20, F21V 21/14, F21W 111/06

(54) **A LIGHT SIGNALLER FOR AIRPORT STRUCTURES**
LICHTSIGNALGEBER FÜR FLUGHAFENSTRUKTUREN
DISPOSITIF DE SIGNALISATION LUMINEUSE POUR DES STRUCTURES D'AÉROPORT

(30) Priority: 27.03.2015 IT BO20150151
(43) Date of publication of application: 05.10.2016
(73) Proprietor: Energy Technology S.r.l., 40056 Valsamoggia (IT)
(72) Inventor: RAULI, Emidio, 40137 BOLOGNA (IT); SCARAMAGLI, Piero, 40068 SAN LAZZARO DI SAVENA (IT)
(74) Representative: Milli, Simone

(56) References cited:
- JP-U- S57 204 300
- US-A- 4 355 349
- US-A- 4 521 836
- US-A1- 2006 146 536
- US-A1- 2010 302 765

## Description

This invention relates to a light signaller for airports, in particular for aircraft landing runways.

The invention relates to the sector of light signallers in the aviation field.

In the technical sector in question, there are prior art light signallers to allow the lighting of the landing runways of airport and heliports.

These devices are designed to provide light signals along landing runways, in order to guide the aircraft with light signals during the landing phase.

The prior art solutions for these devices comprise a fixed body (which is generally fixed to the ground or to a supporting base) and a mobile head (containing the lights) which is connected to the fixed body.

Typically, the type of lighting devices used is of the type with a lamp.

It is important to be able to regulate the inclination of the mobile head relative to the fixed body, depending on the actual installation conditions along the landing runway, in order to release the light beam according to a predetermined angle towards the aircraft landing on the runway.

There is therefore a strongly felt need by the technical personnel in charge of the assembly and the maintenance of the signallers for regulating the inclination of the mobile head relative to the fixed body in a precise, fast and easy manner.

More specifically, this need is particularly felt in the case of LED signallers, which have electronics inside the mobile head for operation of the lights which are particularly heavy.

Document JPS57204300 discloses a light signaler for airport structures, comprising: a fixed supporting element; a head, connected to the supporting element such as to be mobile with respect thereto, provided with at least a lighting element. The light signaler further comprising at least a regulating and fixing device which is connected to the mobile head and to the supporting element and configured such as to be regulated in length along a regulating direction with a purpose of positioning and fixing the head with respect to the supporting element in a plurality of positions.

The aim of this invention is to satisfy the above-mentioned need by providing a light signalling device.

More specifically, the aim of this invention is to provide a light signaller for landing runways which allows the inclination of the mobile head to be regulated relative to the fixed body in a precise, fast and easy manner. These aims are fully achieved by the light signaller according to this invention as characterised in the appended claims.

This and other features of the invention will become more apparent from the following description of a preferred embodiment of it, illustrated by way of non-limiting example in the accompanying drawings, in which:
- Figure 1 shows a schematic front view of a first embodiment of the light signaller.
- Figure 2 shows a schematic side view of a first embodiment of the regulating and fixing device of Figure 1.
- Figure 3 shows a schematic side view of a second embodiment of the regulating and fixing device of Figure 1.
- Figure 4 shows a schematic view of a detail of the regulating and fixing device according to the previous drawings.
- Figure 5 shows a schematic view of a detail of a further embodiment of the regulating and fixing device.

With reference to the accompanying drawings, the numeral 1 denotes a light signaller for airport structures, in particular for landing runways.

The light signaller 1 is designed to provide illumination on landing runways.

The light signaller 1 for aircraft landing runways comprises a supporting element 3.

The fixed supporting element 3 may be fixed to a supporting structure, such as a base or a pole.

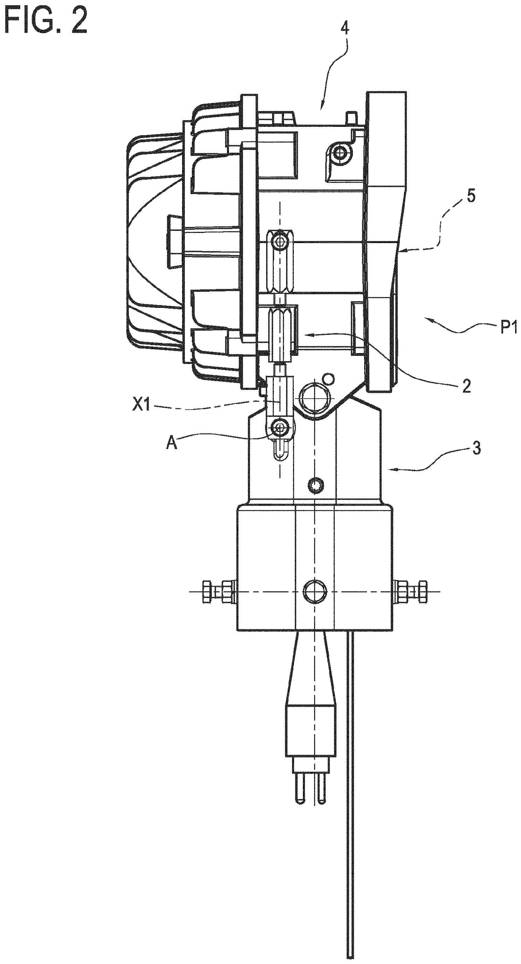

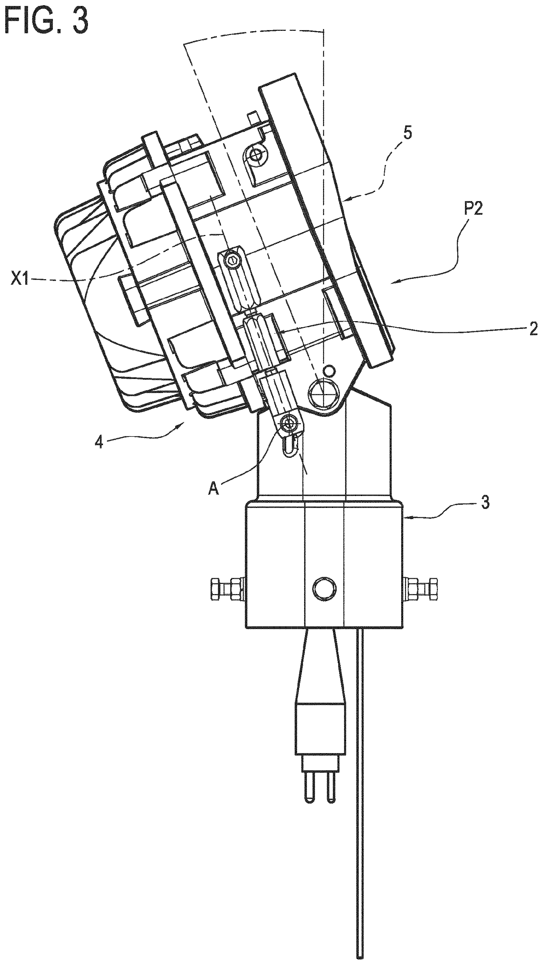

Further, the light signaller for aircraft landing runways comprises a head 4 connected to the supporting element 3 so as to be mobile (rotate) relative to the latter, equipped with at least one lighting element 5 (not visible in Figures 2 and 3, since positioned inside the head 4 and indicated with a dashed line).

The mobile head 4 is rotatably connected (hinged) to the supporting element 3; in particular, the mobile head 4 is connected to the supporting element 3 so as to rotate about a centre of rotation A.

The lighting element 5 is preferably an LED.

Still more preferably, the head 4 comprises a plurality of LEDs.

Moreover, preferably, the head 4 comprises the control electronics of the lighting element 5.

Further, the light signaller comprises at least one regulating and fixing device 2 (hereafter referred to also a regulating device) which is connected to the mobile head 4 and to the supporting element 3.

The regulating and fixing device 2 is configured for being regulated in length along a regulating direction X1 (of main extension) with a purpose of positioning and fixing the head 4 with respect to the supporting element 3 in a plurality of positions.

It should be noted that the regulating direction X1 is not fixed in space.

It should be noted that the expression "regulation in length" means the varying of the length of the regulating and fixing device 2 along the regulating direction X1.

Further, the at least one regulating and fixing device 2 has an elongate shape in a longitudinal direction X1 and the regulating and fixing device 2 is configured so as to be regulated in length along the above-mentioned longitudinal direction X1.

The above-mentioned regulating and fixing device 2 comprises a first portion 6a and a second portion 6b.

The first portion 6a is preferably configured so as to rotate with respect to the second portion 6b so as to enable a regulation in length of the regulating and fixing device 2 so as to position and fix the head 4 with respect to the supporting element 3 in a plurality of positions.

It should be noted that, in this way, the head 4 may be located in a desired position between those theoretically accessible (plurality of operating positions).

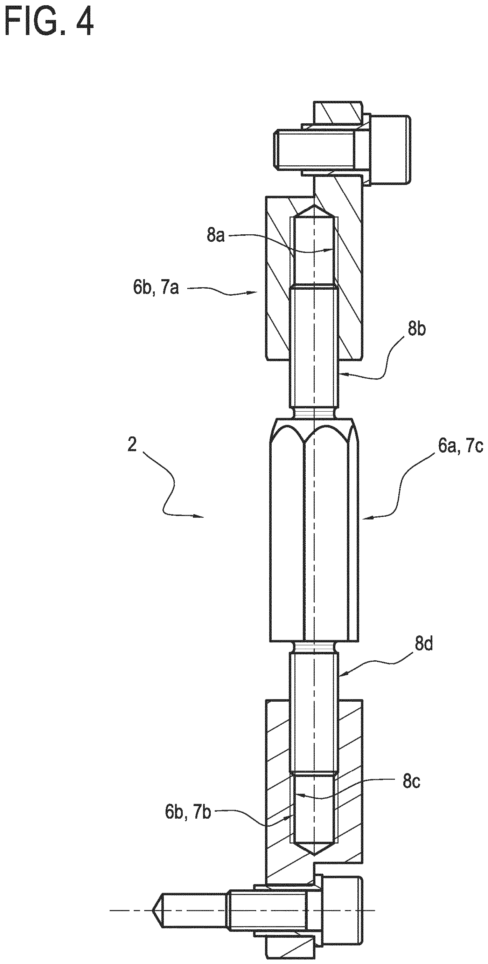

According to an aspect (illustrated in Figure 4), the first portion 6a of the regulating and fixing device 2 has at least a male threaded region and the second portion 6b has at least a female threaded region.

The male and female threaded regions are configured so as to couple to one another.

More specifically, the second portion 6b comprises:
- a first connecting element 7a connected to the head 4;
- a second connecting element 7b connected to the supporting element 3.

The first connecting element 7a is preferably hinged (connected rotatably) to the head 4.

The second connecting element 7b is preferably hinged (rotatably connected) to the supporting element 3.

The first portion comprises a regulating element 7c operatively connected to the first connecting element 7a and to the second connecting element 7b in order to be operatively mobile in rotation with respect to the first connecting element 7a and to the second connecting element 7b.

More specifically, the first connecting element 7a has a first thread and the regulating element 7c has a second thread 8b designed to couple with the first thread 8a.

Even more specifically, the thread 8b is in the form of a male screw and the thread 8a is in the form of a female screw.

The second connecting element 7b also has a third thread 8c and the regulating element 7c has a fourth thread 8d designed to couple with the third thread 8c.

It should be noted that the third thread 8c and the second thread 8b are positioned, along the regulating direction X1, on opposite sides.

The second thread 8b is a male thread, the first thread 8a is a female thread, the third thread 8c is a female thread, the fourth thread 8d is a male thread.

Even more specifically, the thread 8d is in the form of a male screw and the thread 8c is in the form of a female screw.

As described above, the first thread 8a and the second thread 8b and the third thread 8c and fourth thread 8d have non-matching helical directions. In other words, the first thread 8a and the second thread 8b pair and the third thread 8c and fourth thread 8d pair have non-matching helical directions relative to each other.

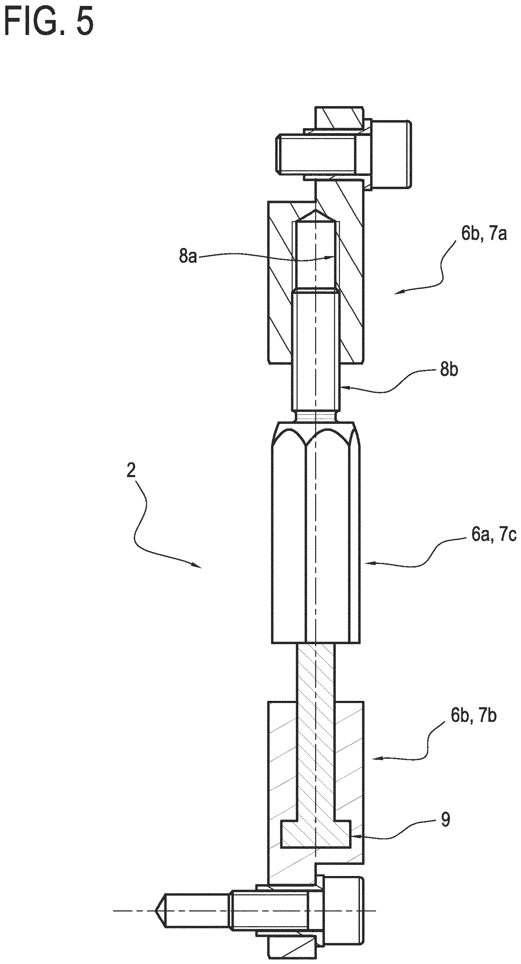

According to a different embodiment, illustrated in Figure 5, the first connecting element 7a has a first thread 8a and the regulating element 7c has a second thread 8b designed to couple with the first thread 8a.

Again according to Figure 5, the regulating device also comprises a rotating joint 9 configured to connect (with the possibility of relative rotation) the second connecting element 7b with the regulating element 7c and to maintain unvaried the distance between the second connecting element 7b and the regulating element 7c along the regulating direction X1.

According to another aspect, the regulating element 7c has a conformation constituted by a plurality of faces, with the aim of enabling gripping thereof with a wrench and operating the regulation of the regulating and fixing device 2.

This facilitates the regulation during both installation and regular maintenance.

As illustrated, the regulating element 7c has a hexagonal shape to facilitate the above-mentioned gripping with the wrench.

The above description highlights a series of advantages which emerge from the invention, particularly as regards the speed and the simplicity of regulating the light signaller 1 using the regulating and fixing device 2.

Further, as described above, the regulation of the regulating and fixing device 2 can be performed in a manner which is operatively more functional by means of the gripping set up with the wrench.

In this way it is possible to perform the regulations and routine maintenance operations in a more precise and facilitated manner, irrespective of the climatic and operational conditions which occur at the landing runway.

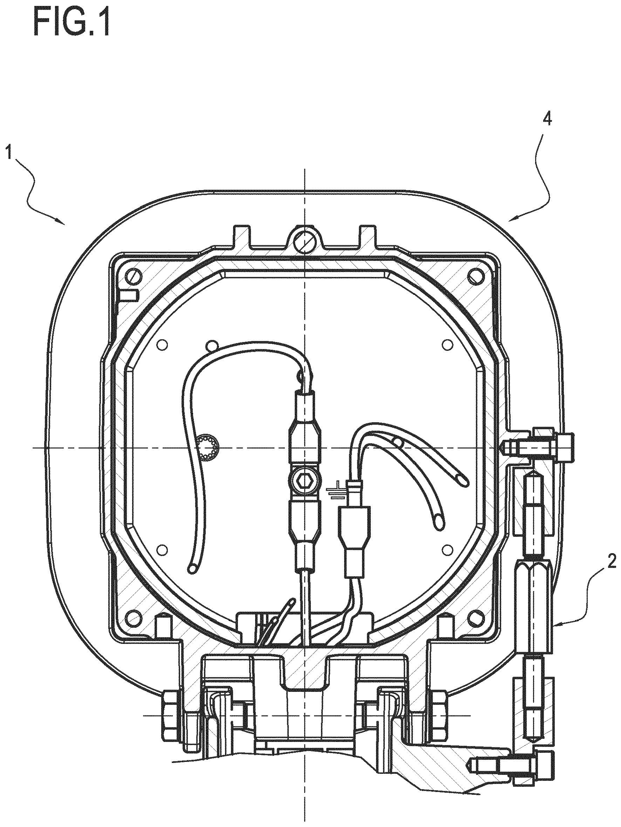

The operation of the invention is described below, with particular reference to a regulation performed in the embodiment of Figures 1 to 4, in order to better understand some aspects of the invention, without, however, this operation being considered as limiting the scope of the invention.

Starting from any position P1 of the head 4 relative to the supporting element 3, if the operator wishes to modify the position of the head 4 relative to the supporting element 3 until reaching a position P2, the following the operations are performed.

When the operator needs to regulate the position of the head 4, the regulating device 2 is varied in length by a wrench.

The wrench, for example hexagonal, is joined to the regulating element 7c. The operator, through the rotation of the wrench, rotates the regulating element 7c.

The rotation of the regulating element 7c rotates the upper male thread 8b, which enters deeper into the female thread 8a.

Simultaneously, the rotation of the regulating element 7c rotates the lower male thread 8d, which enters deeper into the female thread 8c.

The combined effect of inserting the upper screw 8b in the respective female screw 8a and the lower screw 8d in the respective female screw 8c means that the total length of the regulating and fixing device 2 along the regulating direction X1 is modified, in particular according to the example described and illustrated (Figures 2 and 3), to decrease.

The combined effect of inserting the upper screw 8b in the respective female thread 8a and the lower screw 8d in the respective female thread 8c means that a force is applied on the head 4 along the direction X1, which determines a twisting moment relative to the centre of rotation A of the mobile head 4.

In this way, advantageously, the operator moves the position of the mobile head 4 with a single movement and locks it in the predetermined desired position.

In effect, the angular movement of the mobile head 4, that is, the rotation relative to the centre of rotation A, is only possible following the rotation of the regulating element 7c: in the absence of this rotation, the mobile head 4 is locked in the position reached.

## Claims

1. A light signaller for airport structures, comprising:
- a fixed supporting element (3);
- a head (4), connected to the supporting element (3) such as to be mobile with respect thereto, provided with at least a lighting element (5), the light signaller (1) comprising at least a regulating and fixing device (2) which is connected to the mobile head (4) and to the supporting element (3), the regulating and fixing device (2) being configured such as to be regulated in length along a regulating direction (X1) with a purpose of positioning and fixing the head (4) with respect to the supporting element (3) in a plurality of positions,
**characterised in that** the regulating and fixing device (2) comprises a first portion (6a) and a second portion (6b), wherein the first portion (6a) is configured so as to rotate with respect to the second portion (6b) with an aim of enabling a regulation in length of the regulating and fixing device (2) so as to position and fix the head (4) with respect to the supporting element (3) in a plurality of positions, and **in that** the second portion (6b) comprises:
- a first connecting element (7a) connected to the head (4);
- a second connecting element (7b) connected to the supporting element (3);
wherein the first portion comprises a regulating element (7c) operatively connected to the first connecting element (7a) and to the second connecting element (7b) in order to be operatively mobile in rotation with respect to the first connecting element (7a) and to the second connecting element (7b).

2. The signaller (1) according to the preceding claim, wherein the at least a lighting element (5) is a LED.

3. The signaller (1) according to any one of the preceding claims, wherein the at least a regulating and fixing device (2) has an elongate shape in a longitudinal direction (X1) and wherein the regulating and fixing device (2) is configured so as to be regulated in length along the longitudinal direction (X1).

4. The signaller (1) according to any one of the preceding claims, wherein the first portion (6a) of the regulating and fixing device (2) has at least a male threaded region and the second portion (6b) has at least a female threaded region, the male and female threaded regions being configured so as to couple to one another.

5. The signaller (1) according to any one of the preceding claims, wherein the first connecting element (7a) has a first thread (8a) and the regulating element (7c) has a second thread (8b) able to couple with the first thread (8a) and wherein the second connecting element (7b) has a third thread (8c) and the regulating element (7c) has a fourth thread (8d) able to couple with the third thread (8c).

6. The signaller (1) according to claim 5, wherein the second thread (8b) is a male thread, the first thread (8a) is a female thread, the third thread (8c) is a female thread, the fourth thread (8d) is a male thread.

7. The signaller (1) according to claim 6, wherein the first thread (8a) and the second thread (8b) and the third thread (8c) and fourth thread (8d) have non-matching helical directions.

8. The signaller (1) according to any one of the preceding claims, wherein the first connecting element (7a) exhibits a first thread (8a) and the regulating element (7c) exhibits a second thread (8b) able to couple with the first thread (8a), and the regulating device comprises a rotating joint (9) configured so as to rotatably connect the second connecting element (7b) with the regulating element (7c) and to maintain unvaried the distance between the second connecting element (7b) and the regulating element (7c) along the regulating direction (X1).

9. The signaller (1) according to any one of the preceding claims , wherein the regulating element (7c) has a conformation constituted by a plurality of faces, with the aim of enabling gripping thereof with a wrench and operating the regulation of the regulating and fixing device (2).

10. The signaller (1) according to claim 9, wherein the regulating element (7c) has a hexagonal conformation.

## Patentansprüche

1. Lichtsignalgeber für Flughafenstrukturen, umfassend:
- ein fixiertes Halterungselement (3);
- einen Kopf (4), der mit dem Halterungselement (3) verbunden ist, sodass er zu diesem mobil ist, versehen mit mindestens einem Beleuchtungselement (5), wobei der Lichtsignalgeber (1) mindestens eine Regulierungs- und Fixierungsvorrichtung (2) umfasst, die mit dem mobilen Kopf (4) und dem Halterungselement (3) verbunden ist, wobei die Regulierungs- und Fixierungsvorrichtung (2) so ausgelegt ist, dass sie in der Länge entlang einer Regulierungsrichtung (X1) reguliert wird, mit dem Zweck, den Kopf (4) zum Halterungselement (3) in einer Vielzahl an Positionen zu positionieren und zu fixieren, **dadurch gekennzeichnet, dass** die Regulierungs- und Halterungsvorrichtung (2) einen ersten Abschnitt (6a) und einen zweiten Abschnitt (6b) umfasst, wobei der erste Abschnitt (6a) so ausgelegt ist, dass er sich zum zweiten Abschnitt (6b) dreht, mit dem Ziel, eine Längenregulierung der Regulierungs- und Fixierungsvorrichtung (2) zu ermöglichen, sodass der Kopf (4) zum Halterungselement (3) in einer Vielzahl an Positionen positioniert und reguliert wird, und dadurch, dass der zweite Abschnitt (6b) Folgendes umfasst:
- ein erstes Verbindungselement (7a), das mit dem Kopf (4) verbunden ist;
- ein zweites Verbindungselement (7b), das mit dem Halterungselement (3) verbunden ist,
wobei der erste Abschnitt ein Regulierungselement (7c) umfasst, das betriebswirksam mit dem ersten Verbindungselement (7a) und dem zweiten Verbindungselement (7b) verbunden ist, um betriebswirksam in Drehung zum ersten Verbindungselement (7a) und zum zweiten Verbindungselement (7b) mobil zu sein.

2. Signalgeber (1) nach dem vorhergehenden Anspruch, wobei das mindestens eine Beleuchtungselement (5) eine LED ist.

3. Signalgeber (1) nach einem der vorhergehenden Ansprüche, wobei die mindestens eine Regulierungs- und Fixierungsvorrichtung (2) eine längliche Form in Längsrichtung (X1) aufweist und wobei die Regulierungs- und Fixierungsvorrichtung (2) ausgelegt ist, um in der Länge entlang der Längsrichtung (X1) reguliert zu werden.

4. Signalgeber (1) nach einem der vorhergehenden Ansprüche, wobei der erste Abschnitt (6a) der Regulierungs- und Fixierungsvorrichtung (2) mindestens eine Außengewinderegion aufweist und der zweite Abschnitt (6b) mindestens eine Innengewinderegion aufweist, wobei die Außengewinderegion und die Innengewinderegion ausgelegt sind, um miteinander gekoppelt zu werden.

5. Signalgeber (1) nach einem der vorhergehenden Ansprüche, wobei das erste Verbindungselement (7a) ein erstes Gewinde (8a) aufweist und das Regulierungselement (7c) ein zweites Gewinde (8b) aufweist, das mit dem ersten Gewinde (8a) gekoppelt werden kann, und wobei das zweite Verbindungselement (7b) ein drittes Gewinde (8c) aufweist und das Regulierungselement (7c) ein viertes Gewinde (8d) aufweist, das mit dem dritten Gewinde (8c) gekoppelt werden kann.

6. Signalgeber (1) nach Anspruch 5, wobei das zweite Gewinde (8b) ein Außengewinde ist, das erste Gewinde (8a) ein Innengewinde ist, das dritte Gewinde (8c) ein Innengewinde ist und das vierte Gewinde (8d) ein Außengewinde ist.

7. Signalgeber (1) nach Anspruch 6, wobei das erste Gewinde (8a) und das zweite Gewinde (8b) und das dritte Gewinde (8c) und das vierte Gewinde (8d) nicht passende Schraubenrichtungen aufweisen.

8. Signalgeber (1) nach einem der vorhergehenden Ansprüche, wobei das erste Verbindungselement (7a) ein erstes Gewinde (8a) aufweist und das Regulierungselement (7c) ein zweites Gewinde (8b) aufweist, das mit dem ersten Gewinde (8a) gekoppelt werden kann, und wobei die Regulierungsvorrichtung ein Drehgelenk (9) aufweist, das ausgelegt ist, um das zweite Verbindungselement (7b) drehbar mit dem Regulierungselement (7c) zu verbinden und den Abstand zwischen dem zweiten Verbindungselement (7b) und dem Regulierungselement (7c) entlang der Regulierungsrichtung (X1) unverändert aufrechtzuerhalten.

9. Signalgeber (1) nach einem der vorhergehenden Ansprüche, wobei das Regulierungselement (7c) eine Beschaffenheit aufweist, bestehend aus einer Vielzahl an Seitenflächen, mit dem Ziel, deren Greifen mit einem Schraubenschlüssel und das Durchführen der Regulierung der Regulierungs- und Fixierungsvorrichtung (2) zu ermöglichen.

10. Signalgeber (1) nach Anspruch 9, wobei das Regulierungselement (7c) eine Sechskantbeschaffenheit aufweist.

## Revendications

1. Dispositif de signalisation lumineuse pour des structures d'aéroport, comprenant :
- un élément de support fixe (3) ;
- une tête (4), reliée à l'élément de support (3) de manière à être mobile par rapport à celui-ci, pourvue d'au moins un élément d'éclairage (5), le dispositif de signalisation lumineuse (1) comprenant au moins un dispositif de réglage et de fixation (2) étant relié à la tête mobile (4) et à l'élément de support (3), le dispositif de réglage et de fixation (2) étant configuré de manière à être réglé en longueur le long d'une direction de réglage (X1) dans un but de positionner et de fixer la tête (4) par rapport à l'élément de support (3) dans une pluralité de positions, **caractérisé en ce que** le dispositif de réglage et de fixation (2) comprend une première partie (6a) et une seconde partie (6b), dans lequel la première partie (6a) est configurée de manière à pivoter par rapport à la seconde partie (6b) dans le but de permettre un réglage en longueur du dispositif de réglage et de fixation (2) de manière à positionner et à fixer la tête (4) par rapport à l'élément de support (3) dans une pluralité de positions, et **en ce que** la seconde partie (6b) comprend :
- un premier élément de raccordement (7a) relié à la tête (4) ;
- un second élément de raccordement (7b) relié à l'élément de support (3) ;
dans lequel la première partie comprend un élément de réglage (7c) fonctionnellement relié au premier élément de raccordement (7a) et au second élément de raccordement (7b) afin d'être fonctionnellement mobile en rotation par rapport au premier élément de raccordement (7a) et au second élément de raccordement (7b).

2. Dispositif de signalisation (1) selon la revendication précédente, dans lequel l'au moins un élément d'éclairage (5) est une LED.

3. Dispositif de signalisation (1) selon l'une quelconque des revendications précédentes, dans lequel l'au moins un dispositif de réglage et de fixation (2) possède une forme allongée dans une direction longitudinale (X1) et dans lequel le dispositif de réglage et de fixation (2) est configuré de manière à être réglé en longueur le long de la direction longitudinale (X1).

4. Dispositif de signalisation (1) selon l'une quelconque des revendications précédentes, dans lequel la première partie (6a) du dispositif de réglage et de fixation (2) comporte au moins une zone filetée mâle et la seconde partie (6b) comporte au moins une zone filetée femelle, les zones filetées mâle et femelle étant configurées de manière à s'accoupler réciproquement.

5. Dispositif de signalisation (1) selon l'une quelconque des revendications précédentes, dans lequel le premier élément de raccordement (7a) comporte un premier filetage (8a) et l'élément de réglage (7c) comporte un second filetage (8b) pouvant s'accoupler au premier filetage (8a) et dans lequel le second élément de raccordement (7b) comporte un troisième filetage (8c) et l'élément de réglage (7c) comporte un quatrième filetage (8d) pouvant être couplé au troisième filetage (8c).

6. Dispositif de signalisation (1) selon la revendication 5, dans lequel le second filetage (8b) est un filetage mâle, le premier filetage (8a) est un filetage femelle, le troisième filetage (8c) est un filetage femelle, le quatrième filetage (8d) est un filetage mâle.

7. Dispositif de signalisation (1) selon la revendication 6, dans lequel le premier filetage (8a) et le second filetage (8b) et le troisième filetage (8c) et le quatrième filetage (8d) comportent des directions hélicoïdales qui ne correspondent pas.

8. Dispositif de signalisation (1) selon l'une quelconque des revendications précédentes, dans lequel le premier élément de raccordement (7a) présente un premier filetage (8a) et l'élément de réglage (7c) présente un second filetage (8b) pouvant s'accoupler au premier filetage (8a), et le dispositif de réglage comprend un joint tournant (9) configuré de manière à raccorder en rotation le second élément de raccordement (7b) à l'élément de réglage (7c) et à maintenir inchangée la distance entre le second élément de raccordement (7b) et l'élément de réglage (7c) le long de la direction de réglage (X1).

9. Dispositif de signalisation (1) selon l'une quelconque des revendications précédentes, dans lequel l'élément de réglage (7c) a une forme constituée d'une pluralité de côtés dans le but de permettre sa préhension avec une clé et d'effectuer le réglage du dispositif de réglage et de fixation (2).

10. Dispositif de signalisation (1) selon la revendication 9, dans lequel l'élément de réglage (7c) a une forme hexagonale.
